# FASCICULE DE BREVET EUROPEEN

(11) **EP 2 688 772 B1**
(45) Date de publication et mention de la délivrance du brevet: **10.12.2014**
(21) Numéro de dépôt: 12712298.4
(22) Date de dépôt: 29.02.2012
(51) Int. Cl.: B60R 19/52

(54) **PARTIE AVANT D'UN VEHICULE AUTOMOBILE COMPRENANT UNE GRILLE D'ENTREE D'AIR, UN PARE-CHOC ET UN DEFLECTEUR D'AIR**
VORDERTEIL EINES KRAFTFAHRZEUGES MIT LUFTEINLASSGITTER, STOSSFÄNGER UND WINDABWEISER
FRONT SECTION OF A MOTOR VEHICLE, INCLUDING AN AIR INTAKE SCREEN, A BUMPER, AND AN AIR DEFLECTOR

(30) Priorité: 24.03.2011 FR 1152448
(43) Date de publication de la demande: 29.01.2014
(73) Titulaire: PEUGEOT CITROËN AUTOMOBILES S.A., 78140 Vélizy Villacoublay (FR)
(72) Inventeur: CHARPENTIER, Herve, F-25230 Dasle (FR)
(74) Mandataire: Fosse, Danièle
(86) Numéro de dépôt international: PCT/FR2012/050419
(87) Numéro de publication internationale: WO 2012/127143

(56) Documents cités:
- DE-A1-102008 024 942
- JP-A- 58 063 545
- US-A1- 2009 066 096

## Description

La présente invention concerne une partie avant d'un véhicule automobile comprenant une grille d'entrée d'air, un déflecteur d'air s'étendant sous cette grille d'entrée d'air et un pare-choc avant dont la peau est disposée entre cette grille et ce déflecteur. Une telle partie avant est décrite dans DE 10 2008 024 942 A1.

L'invention concerne également un véhicule automobile comportant une telle partie avant.

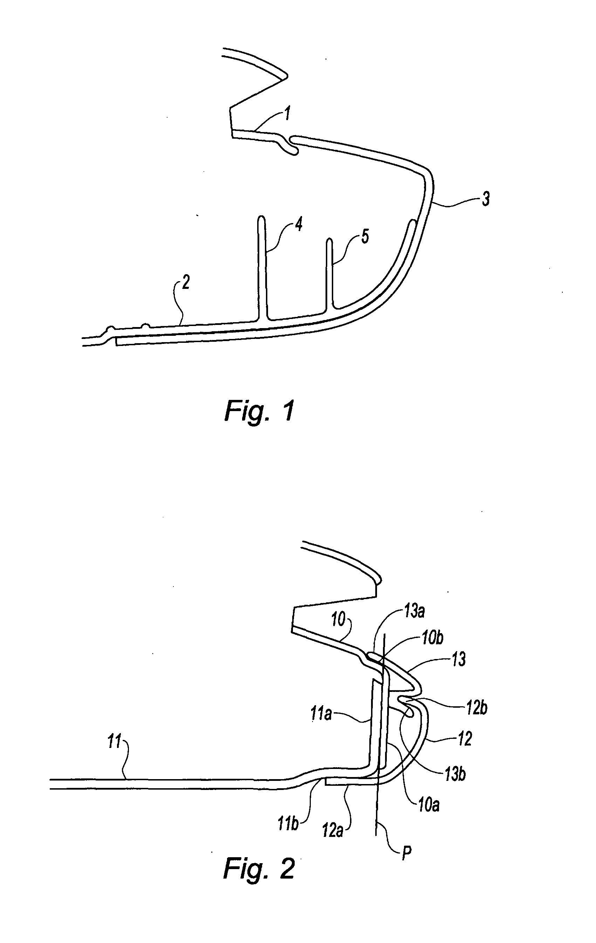

La figure 1 représente, en coupe longitudinale verticale, une partie avant connue d'un véhicule automobile.

Cette figure montre la grille d'entrée d'air 1, un déflecteur d'air 2 s'étendant sous cette grille 1 et un pare-choc avant dont la peau 3 est disposée entre la grille 1 et le déflecteur 2.

Le déflecteur 2 intègre une fonction choc piéton qui est remplie notamment par les deux parois verticales 4 et 5 moulées d'une seule pièce avec la matière plastique constituant le déflecteur 2.

Ces deux parois 4, 5 forment une poutre qui rigidifie le déflecteur 2 et qui empêche qu'en cas de choc, contre une jambe d'un piéton, cette jambe passe sous le véhicule.

Un tel déflecteur 2 n'est pas reconductible d'un type de véhicule à un autre.

En effet, pour que le déflecteur 2 soit reconductible, il faudrait que la partie inférieure de la peau 3 du pare-choc soit identique pour les différents véhicules, ce qui est trop contraignant par rapport aux exigences de style.

Ainsi, on est actuellement obligé de modifier le déflecteur 2 pour qu'il s'adapte au style du pare-choc du véhicule.

Or, une telle modification est coûteuse du fait que le déflecteur 2 intègre outre sa fonction de déflecteur d'air, la fonction choc piéton.

Le but de la présente invention est de remédier à cet inconvénient.

Ce but est atteint, selon l'invention, grâce à une partie avant d'un véhicule automobile comprenant une grille d'entrée d'air, un déflecteur d'air s'étendant sous cette grille d'entrée d'air et un pare-choc avant dont la peau est disposée entre cette grille et ce déflecteur, caractérisée en ce que l'avant de la grille d'entrée d'air porte une paroi sensiblement verticale dirigée vers l'avant du déflecteur d'air et l'avant de ce déflecteur porte une paroi sensiblement verticale dirigée vers l'avant de la grille et qui recouvre au moins partiellement la paroi sensiblement verticale portée par la grille, la peau du pare-choc située entre l'avant de la grille et l'avant du déflecteur s'étendant devant les deux parois sensiblement verticales.

La paroi sensiblement verticale portée par l'avant du déflecteur d'air qui recouvre au moins partiellement la paroi sensiblement verticale portée par la grille permet au déflecteur d'air de remplir la fonction choc piéton tout en permettant à ce déflecteur d'être reconductible sur d'autres types de véhicules.

En effet, la peau du pare-choc reliant l'avant de la grille et l'avant du déflecteur peut présenter des styles différents.

Dans une version préférée de l'invention, la paroi sensiblement verticale portée par l'avant de la grille s'appuie sur la face avant de la paroi sensiblement verticale portée par l'avant du déflecteur.

De préférence également, les deux parois sensiblement verticales s'appuient l'une sur l'autre sur sensiblement toute la hauteur de ces deux parois.

Dans un mode de réalisation avantageux de l'invention, l'avant du déflecteur comporte à l'arrière de sa paroi sensiblement verticale, un épaulement sur lequel s'appuie le bord inférieur de la peau du pare-choc.

De même, l'avant de la grille peut comporter à l'arrière de sa paroi sensiblement verticale, un épaulement sur lequel s'appuie le bord supérieur de la peau du pare-choc ou celui d'un enjoliveur ou jonc disposé entre la grille et la peau du pare-choc.

Dans un mode de réalisation particulièrement avantageux, le bord supérieur de la peau du pare-choc est engagé dans une gorge reliée au bord inférieur de l'enjoliveur ou jonc et le fond de la gorge est en contact avec la paroi sensiblement verticale portée par l'avant de la grille.

Selon un autre aspect, l'invention concerne également un véhicule automobile comportant une partie avant selon l'invention telle que définie ci-dessus.

D'autres particularités et avantages de l'invention apparaîtront encore tout au long de la description ci-après.

Aux dessins annexés, donnés à titre d'exemples, non limitatifs :
- la figure 2 est une vue en coupe longitudinale verticale d'une partie avant de véhicule automobile selon l'invention.

La figure 2 représente la partie avant d'un véhicule automobile comprenant une grille d'entrée d'air 10, un déflecteur d'air 11 s'étendant sous cette grille d'entrée d'air 10 et un pare-choc avant dont la peau 12 est disposée entre cette grille 10 et ce déflecteur 11.

Conformément à l'invention, l'avant de la grille d'entrée d'air 10 porte une paroi 10a sensiblement verticale dirigée vers l'avant du déflecteur d'air 11 et l'avant de ce déflecteur 11 porte une paroi sensiblement verticale 11 a dirigée vers l'avant de la grille 10 et qui recouvre au moins partiellement la paroi sensiblement verticale 10a portée par la grille 10.

La peau 12 du pare-choc est disposée entre l'avant de la grille 10 et l'avant du déflecteur 11 et s'étend devant les deux parois sensiblement verticales 10a, 11 a.

Dans l'exemple représenté, la paroi sensiblement verticale 10a portée par l'avant de la grille 10 s'appuie sur la face avant de la paroi sensiblement verticale 11 a portée par l'avant du déflecteur 11.

Autrement dit, la paroi 11 a est située derrière la paroi 10a.

En outre, les deux parois sensiblement verticales 10a, 11 a s'appuient l'une sur l'autre sur sensiblement toute la hauteur de ces deux parois 10a, 11 a, suivant un plan P sensiblement vertical.

Par ailleurs, l'avant du déflecteur 11 comporte à l'arrière de sa paroi sensiblement verticale 11 a, un épaulement 11 b sur lequel s'appuie le bord inférieur 12a de la peau 12 du pare-choc.

De même, l'avant de la grille 10 comporte à l'arrière de sa paroi sensiblement verticale 10a, un épaulement 10b sur lequel peut s'appuyer soit le bord supérieur de la peau 12 du pare-choc, soit, comme montré sur la figure 2, le bord supérieur 13a d'un enjoliveur 13 ou jonc disposé entre la grille 10 et la peau 12 du pare-choc.

Dans cet exemple, le bord supérieur 12b de la peau 12 du pare-choc est engagé dans une gorge 13b reliée au bord inférieur de l'enjoliveur ou jonc 13.

Le fond de cette gorge 13b est en contact avec la paroi sensiblement verticale 10a portée par l'avant de la grille 10.

La paroi sensiblement verticale 11a du déflecteur 11 s'appuyant sur la paroi sensiblement verticale 10a de la grille 10 confère au déflecteur 11 une rigidité suffisante pour former une poutre répondant aux exigences de la norme choc piéton.

De plus, la structure du déflecteur 11 et celle de la grille 10 s'adaptent à une diversité de style pour la peau 12 du pare-choc, y compris l'insertion d'un enjoliveur 13 entre l'avant de la grille 10 et la peau 12 du pare-choc.

Dans le cas de l'insertion d'un enjoliveur 13, la présence des parois sensiblement verticales 10a, 11 a permet de constituer un point d'appui pour le bord supérieur 12b de la peau engagé dans la gorge 13b de l'enjoliveur 13.

Ainsi, le déflecteur 11 est reconductible d'un véhicule à un autre d'une même gamme de véhicule.

Le fait que ce déflecteur 11 ne nécessite pas d'être modifié pour l'adapter au style que l'on souhaite donner à la peau 12 du pare-choc permet de réduire les coûts de fabrication et de gestion des pièces.

## Revendications

1. Partie avant d'un véhicule automobile comprenant une grille d'entrée d'air (10), un déflecteur d'air (11) s'étendant sous cette grille d'entrée d'air (10) et un pare-choc avant dont la peau (12) est disposée entre cette grille (10) et ce déflecteur (11), **caractérisée en ce que** l'avant de la grille d'entrée d'air (10) porte une paroi sensiblement verticale (10a) dirigée vers l'avant du déflecteur d'air (11) et l'avant de ce déflecteur (11) porte une paroi sensiblement verticale (11 a) dirigée vers l'avant de la grille (10) et qui recouvre au moins partiellement la paroi sensiblement verticale (10a) portée par la grille (10), la peau du pare-choc située entre l'avant de la grille (10) et l'avant du déflecteur (11) s'étendant devant les deux parois sensiblement verticales (10a, 11 a).

2. Partie avant selon la revendication 1, **caractérisée en ce que** la paroi sensiblement verticale (10a) portée par l'avant de la grille (10) s'appuie sur la face avant de la paroi sensiblement verticale (11 a) portée par l'avant du déflecteur (11).

3. Partie avant selon l'une des revendications 1 ou 2, **caractérisée en ce que** les deux parois sensiblement verticales (10a, 11 a) s'appuient l'une sur l'autre sur sensiblement toute la hauteur de ces deux parois (10a 11 a).

4. Partie avant selon l'une des revendications 1 à 3, **caractérisée en ce que** l'avant du déflecteur (11) comporte à l'arrière de sa paroi sensiblement verticale (11 a), un épaulement (11 b) sur lequel s'appuie le bord inférieur (12a) de la peau (12) du pare-choc.

5. Partie avant selon l'une des revendications 1 à 4, **caractérisée en ce que** l'avant de la grille (10) comporte à l'arrière de sa paroi sensiblement verticale (10a), un épaulement (10b) sur lequel s'appuie le bord supérieur de la peau (12) du pare-choc ou celui d'un enjoliveur ou jonc (13) disposé entre la grille (10) et la peau (12) du pare-choc.

6. Partie avant selon la revendication 5, **caractérisée en ce que** le bord supérieur (12b) de la peau (12) du pare-choc est engagé dans une gorge (13b) reliée au bord inférieur de l'enjoliveur ou jonc (13).

7. Partie avant selon la revendication 6, **caractérisée en ce que** le fond de la gorge (13b) est en contact avec la paroi sensiblement verticale (10a) portée par l'avant de la grille (10).

8. Véhicule automobile comportant une partie avant selon l'une des revendications 1 à 7.

## Patentansprüche

1. Vorderteil eines Kraftfahrzeugs, der ein Lufteinlassgitter (10), einen Windabweiser (11), der sich unter diesem Lufteinlassgitter (10) erstreckt, und einen vorderen Stoßfänger aufweist, dessen Blech (12) zwischen diesem Gitter (10) und diesem Abweiser (11) angeordnet ist, **dadurch gekennzeichnet, dass** die Vorderseite des Lufteinlassgitters (10) eine im Wesentlichen vertikale Wand (10a) trägt, die zu der Vorderseite des Windabweisers (11) gerichtet ist, und dass die Vorderseite dieses Windabweisers (11) eine im Wesentlichen vertikale Wand (11a) trägt, die zu der Vorderseite des Gitters (10) gerichtet ist und die im Wesentlichen vertikale Wand (10a), die von dem Gitter (10) getragen wird, mindestens teilweise abdeckt, wobei das Blech des Stoßfängers, das sich zwischen der Vorderseite des Gitters (10) und der Vorderseite des Abweisers (11) befindet, vor den zwei im Wesentlichen vertikalen Wänden (10a, 11a) erstreckt.

2. Vorderteil nach Anspruch 1, **dadurch gekennzeichnet, dass** sich die im Wesentlichen vertikale Wand (10a), die von der Vorderseite des Gitters (10) getragen wird, auf die Vorderseite der im Wesentlichen senkrechten Wand (11a), die von der Vorderseite des Abweisers (11) getragen wird, stützt.

3. Teil nach einem der Ansprüche 1 oder 2, **dadurch gekennzeichnet, dass** sich die zwei im Wesentlichen vertikalen Wände (10a, 11a) auf im Wesentlichen der gesamten Höhe dieser zwei Wände (10a, 11a) aufeinander stützen.

4. Vorderteil nach einem der Ansprüche 1 bis 3, **dadurch gekennzeichnet, dass** die Vorderseite des Abweisers (11) an der Rückseite seiner im Wesentlichen vertikalen Wand (11a) einen Ansatz (11b), der sich auf den unteren Rand (12a) des Blechs (12) des Stoßfängers stützt, aufweist.

5. Vorderteil nach einem der Ansprüche 1 bis 4, **dadurch gekennzeichnet, dass** die Vorderseite des Gitters (10) an der Rückseite seiner im Wesentlichen vertikalen Wand (10a) einen Ansatz (10b) trägt, auf den sich der obere Rand des Blechs (12) des Stoßfängers oder das einer Zierleiste oder eines Stabs (13), die/der zwischen dem Gitter (10) und dem Blech (12) des Stoßfängers angeordnet ist, stützt.

6. Vorderteil nach einem der Ansprüche 5, **dadurch gekennzeichnet, dass** der obere Rand (12b) des Blechs (12) des Stoßfängers in eine Hohlkehle (13b), die mit dem unteren Rand der Zierleiste oder eines Stabs (13) verbunden ist, eingreift.

7. Vorderteil nach Anspruch 6, **dadurch gekennzeichnet, dass** der Grund der Hohlkehle (13b) mit der im Wesentlichen senkrechten Wand (10a), die von der Vorderseite des Gitters (10) getragen wird, in Berührung ist.

8. Kraftfahrzeug, das einen Vorderteil nach einem der Ansprüche 1 bis 7 aufweist.

## Claims

1. A front section of a motor vehicle, including an air intake screen (10), an air deflector (11) extending under this air intake screen (10) and a front bumper, the cover (12) of which is arranged between this screen (10) and this deflector (11), **characterized in that** the front of the air intake screen (10) carries a substantially vertical wall (10a) directed toward the front of the air deflector (11), and the front of this deflector (11) carries a substantially vertical wall (11a) directed toward the front of the screen (10) and at least partially covering the substantially vertical wall (10a) carried by the screen (10), the cover of the bumper situated between the front of the screen (10) and the front of the deflector (11) extending in front of the two substantially vertical walls (10a, 11a).

2. The front section according to Claim 1, **characterized in that** the substantially vertical wall (10a) carried by the front of the screen (10) rests on the front face of the substantially vertical wall (11a) carried by the front of the deflector (11).

3. The front section according to one of Claims 1 or 2, **characterized in that** the two substantially vertical walls (10a, 11a) rest one on the other over substantially the entire height of these two walls (10a, 11a).

4. The front section according to one of Claims 1 to 3, **characterized in that** the front of the deflector (11) comprises at the rear of its substantially vertical wall (11a) a shoulder (11b) on which the lower edge (12a) of the cover (12) of the bumper rests.

5. The front section according to one of Claims 1 to 4, **characterized in that** the front of the screen (10) comprises at the rear of its substantially vertical wall (10a) a shoulder (10b) on which the upper edge of the cover (12) of the bumper rests, or that of a trim or strip (13) arranged between the screen (10) and the cover (12) of the bumper.

6. The front section according to Claim 5, **characterized in that** the upper edge (12b) of the cover (12) of the bumper is engaged in a groove (13b) connected to the lower edge of the trim or strip (13).

7. The front section according to Claim 6, **characterized in that** the bottom of the groove (13b) is in contact with the substantially vertical wall (10a) carried by the front of the screen (10).

8. A motor vehicle comprising a front section according to one of Claims 1 to 7.
